# EUROPÄISCHE PATENTSCHRIFT

(11) **EP 0 655 355 B1**
(45) Veröffentlichungstag und Bekanntmachung des Hinweises auf die Patenterteilung: **11.02.1998**
(21) Anmeldenummer: 94117729.7
(22) Anmeldetag: 10.11.1994
(51) Int. Cl.: B60G 3/20

(54) **Radaufhängung**
Wheel suspension
Suspension de roue

(30) Priorität: 29.11.1993 DE 4340554; 01.07.1994 DE 4423126
(43) Veröffentlichungstag der Anmeldung: 31.05.1995
(73) Patentinhaber: Dr.Ing.h.c. F. Porsche Aktiengesellschaft, 70435 Stuttgart (DE)
(72) Erfinder: Wahl, Georg, D-75181 Pforzheim (DE); Dietz, Matthias, D-74321 Bietigheim-Bissingen (DE); Schote, Norbert, D-72119 Ammerbuch (DE); Klosterhuber, Robert, D-70439 Stuttgart (DE); Kunert, Reinhard, D-71287 Weissach (DE); Sommerer, Karl, D-75446 Wiernsheim (DE); Gerber, Fritz, D-74399 Walheim (DE)

(56) Entgegenhaltungen:
- EP-A- 0 234 694
- EP-A- 0 271 879
- DE-A- 2 818 198
- DE-A- 3 200 855
- DE-A- 4 108 164
- FR-A- 2 645 800
- PATENT ABSTRACTS OF JAPAN vol. 10, no. 171 (M-489) (2227) 17. Juni 1986 & JP-A-61 021 803 (NISSAN) 30. Januar 1986
- PATENT ABSTRACTS OF JAPAN vol. 10, no. 171 (M-489) (2227) 17. Juni 1986 & JP-A-61 021 802 (NISSAN) 30. Januar 1986
- "Influence of tyre properties and rear axle compliance steer on power-off effect in cornering". Braess, H.H. and Ruf,G., Washington D.C. 1976

## Beschreibung

Die Erfindung bezieht sich auf eine Radaufhängung nach den Oberbegriffen der Ansprüche 1 und 2.

Aus der DE-36 16 005 C2 ist eine Radaufhängung bekannt, bei der ein unterer Querlenker mit seinem einen Ende schwenkbar am Fahrzeugrahmen und mit seinem anderen Ende schwenkbar mit einem Achsschenkel verbunden ist. Am Querlenker ist eine etwa in Längsrichtung verlaufende Strebe befestigt, wobei das freie Ende dieser Strebe am Fahrzeugaufbau elastisch abgestützt ist. Desweiteren ist eine Radaufhängung aus der DE-32 00 855 A1 bekannt, bei der eine Strebe gelenkig mit einem Querlenker verbunden ist. Desweiteren ist aus der DE-41 08 164 C2 eine Radaufhängung bekannt, bei der die obere Lenkerebene zwei aufgelöste Lenkerarme umfasst.

Aus der JP-A-61 21 802 ist eine Radaufhängung für ein Kraftfahrzeug bekannt, weiche unter einer Raddrehachse angeordnete Querlenker umfaßt, die parallel zueinander angeordnet sind und über Lager am Fahrzeugaufbau gehalten werden. Eine Zugestrebe, welche sich in Bezug auf die Fahrtrichtung nach vorne erstreckt, ist am vorderen Querlenker angelenkt und unter einem rechten Winkel zu diesem angeordnet. Nach einer weiteren Ausführung ist die Zugstrebe am Radträger befestigt und verläuft schräg nach vorne. Am Radträger ist desweiteren ein Federbein abgestützt, welches sich schräg zur Innenseite des Fahrzeugs erstreckt. Nach der JP-A-61 21 803 ist eine Radaufhängung bekannt, welche untere Querlenker umfaßt, die parallel zueinander angeordnet sind und oberhalb der Raddrehachse ist ein Dreieckslenker vorgesehen, der ein Gelenk am Radträger aufweist. Über ein Federbein oder dergleichen ist das Rad zum Aufbau hin abgestützt, wobei das Federbein am Radträger angelenkt wird.

Aufgabe der Erfindung ist es, eine Radaufhängung für eine Achse eines Kraftfahrzeugs zu schaffen, die bei auf das Rad einwirkenden Umfangs- und Seitenkräften - eine, eine das Fahrverhalten bei Kurven- und Geradeausfahrt - gezielte elastokinematische Radstellungsänderung und somit ein sicheres Fahrverhalten gewährleistet.

Diese Aufgabe wird erfindungsgemäß durch die kennzeichnenden Merkmale der Ansprüche 1 und 2 gelöst. Weitere vorteilhafte Merkmale beinhalten die Unteransprüche.

Der Erfindung liegen zwei Ausführungen zugrunde, wobei die eine Ausführung eine McPherson-Hinterachse und die weitere Ausführung statt des McPherson-Federbeines zwei aufgelöste Lenkerarme aufweist. Die untere Ebene der Radaufhängung, bestehend aus Querlenker, Zugstrebe und Spurstange ist bei beiden Ausführungen im wesentlichen gleich ausgestaltet.

Durch die aus aufgelösten Lenkerarmen bestehende obere Ebene der Radaufhängung kann die sogenannte ideelle Achse, welche einen Durchstoßpunkt in der Radaufstandsebene bildet, zur Erzielung von auf das Rad bei Brems-, Seiten- und Aufprallkräften einwirkenden Kräften entsprechend den Erfordernissen an das Fahrverhalten des Kraftfahrzeuges vorteilig ausgelegt bzw. angepasst werden.

Die mit der Erfindung hauptsächlich erzielten Vorteile bestehen darin, daß sich durch die geometrische Lage des die Hinterradaufhängung bildenden Querlenkers mit angebundener Zugstrebe und der Spurstange bei auf das Rad einwirkenden Kräften wie Antriebs-, Brems- und Seitenkräften, sowie bei Lastwechselvorgängen, ein stabiles Fahrverhalten durch eine elastokinematische Einstellung der Räder ergibt. Insbesondere wird bei Kurvenfahrt eine Verbesserung des Fahrverhaltens beim Kurveneinleiten und bei Wechselkurven durch ein Invorspurgehen des kurvenäußeren Rades erzielt. Desweiteren wird die Fahrstabilität beim Bremsen in der Kurve sowie bei Geradeausfahrt durch ein Invorspurgehen der Hinterräder verbessert. Beim Beschleunigen in der Kurve wird meist ein Untersteuerverhalten des Kraftfahrzeugs verstärkt. Durch ein Innachspurgehen der Hinterräder wird diese Untersteuerungstendenz abgebaut. Außerdem wird durch diese Funktion das Rad beim Gas-Wegnehmen (Lastwechsel) in Richtung Vorspur verstellt und es wird somit einem Eindrehen beim Lastwechsel in der Kurve entgegengewirkt.

Die geometrische Lage der Radaufhängungselemente wie Federbein, Querlenker, Spurstange und Zugstrebe ist insbesondere so gewählt, daß sich bei den entsprechenden Fahrzuständen jeweils ein gezieltes Invorspurgehen bzw. ein Innachspurgehen des Rades elastokinematisch ergibt.

So erfolgt bei auf das Rad einwirkenden Seitenkräften eine Vorspureinstellung insbesondere des kurvenäußeren Rades. Dies wird durch eine entsprechende Auslegung der Nachlaufstrecke erzielt. Eine durch das obere Stützlager des McPherson-Federbeines und dem Anlenkpunkt des Querlenkers am Radträger verlaufende Achse bildet einen Durchstoßpunkt in der Radaufstandsebene - in bezug auf die Fahrtrichtung - vor der Wirkrichtung der Seitenkraft. Zwischen dem Durchstoßpunkt und der Seitenkraft entsteht ein Hebelarm. Durch ein Moment, gebildet aus diesem Hebelarm und der Seitenkraft, bekommt die Spurstange eine leichte Druckkraft, die geringer ist als die Druckkraft auf den Querlenker. Da die Spurstange härter am Fahrzeugaufbau gelagert ist als der Querlenker, kann sie weniger nach innen nachgeben als der Querlenker, der weicher am Fahrzeugaufbau gelagert ist.

Der Querlenker und die Spurstange sind positiv zueinander eingestellt und bilden einen außerhalb der Spurweite und hinter der Radmittenquerebene - in bezug auf die Fahrtrichtung gesehen - liegenden Radlenkpol.

Bei Seitenkräften wird dem Moment aus der Nachlaufstrecke ein Moment, gebildet aus der Seitenkraft und einem Hebelarm vom Radlenkpol bis zur Wirkrichtung der Seitenkraft, überlagert.

Bei etwa gleich harter Kennung der Lager der Spurstange und des Querlenkers sowie einer in Achsrichtung nachgebenden Lagerung der Zugstrebe am Fahrzeugaufbau, kann sich durch das Moment, gebildet aus Seitenkraft und Hebelarm bis zum Radlenkpol, eine Vorspur des Rades einstellen. Hierbei werden die Querstrebe und die Spurstange - in bezug auf die Fahrtrichtung - nach hinten um die aufbauseitigen Lager geschwenkt, wobei die Zugstrebe dann ebenfalls nach hinten gezogen wird.

Beim Bremsen des Fahrzeugs werden bei einer McPherson-Hinterachse gemäß Anspruch 1 einerseits durch die Bildung des Radlenkpols und andererseits durch den Lenkrollradius sich ergänzende Momente auf das Rad ausgeübt, die beide eine Verstellung der Räder in Richtung Vorspur bewirken.

Der Querlenker und die Spurstange sind hierzu in entsprechend abgestimmten Lagern am Fahrzeugaufbau gehalten und die Zugstrebe kann sich über das aufbauseitige Lager nach hinten - in bezug auf die Fahrtrichtung - verlagern. Der Querlenker wird hierbei auf Druck und die Spurstange auf Zug beansprucht und gleichzeitig verschwenken sie sich um ihre aufbauseitigen Lager nach hinten. Zur Begrenzung der Vorspur ist das aufbauseitige Lager der Zugstrebe mit einer die Zugbewegung begrenzenden Kennung ausgestaltet, so daß die Vorspur entsprechend den Erfordernissen einstellbar ist.

Bei der Ausführung der Hinterachse mit einer oberen, aus zwei aufgelösten Lenkerarmen bestehenden Lenkerebene wird eine Achse gebildet, die die Radaufstandsebene innerhalb der Spurweite trifft und damit auch innerhalb der Wirkrichtung der Bremskraft gemäß Anspruch 9. Hierdurch wird bei Bremskräften das Rad in Richtung Nachspur verstellt, aber durch die gleichzeitig wirkende Längsfederung überwiegt die hierdurch erzielte Verstellung des Rades in Richtung Vorspur um den Radlenkpol, so daß im Endeffekt eine gezielte Vorspureinstellung erzielbar ist.

Bei auf das Rad einwirkenden Antriebskräften bei der McPherson-Hinterachse gemäß Anspruch 1 wird dem in Höhe der Raddrehachse wirkenden Moment aus Antriebskraft x Hebelarm bis zur Achse das Moment um den Radlenkpol überlagert, so daß einer Radstellungsänderung in Richtung Vorspur durch das erstere Moment eine Nachspureinstellung durch das weitere Moment gegenübergestellt wird. Die Spurstange wird bei dieser Nachspureinstellung gezogen und der Querlenker gedrückt, während bei der Vorspureinstellung die Zugstrebe gedrückt und dadurch sich in ihrem aufbauseitigen Lager in Fahrtrichtung nach vorn verlagert, wobei der Querlenker und die Spurstange um ihre aufbauseitigen Lager ebenfalls nach vorn verschwenken.

Bei der Ausführung einer Hinterachse gemäß Anspruch 2 ist durch die obere Lenkerebene eine Achse gebildet, welche in Höhe der Raddrehachse außerhalb einer senkrechten Radmittenlängsebene liegt und somit über die in Höhe der Radmitte bzw. Radantriebswelle wirkende Antriebskraft das Rad in Richtung Nachspur verstellt wird. Durch die gleichzeitig auftretende Längsfederung wird diese Vorspuränderung noch verstärkt.

Ein Ausführungsbeispiel der Erfindung ist in der Zeichnung dargestellt und wird im folgenden näher beschrieben.
Es zeigen
- Fig. 1: eine schaubildliche Darstellung einer McPherson-Hinterradaufhängung,
- Fig. 1a: eine schaubildliche Darstellung einer weiteren Ausführung einer Hinterradaufhängung mit einer aus aufgelösten Lenkerarmen bestehenden oberen Lenkerebene,
- Fig. 2: eine Vorderansicht einer Hinterradaufhängung,
- Fig. 3: eine Seitenansicht der Radaufhängung gemäß Fig. 2,
- Fig. 4: eine Draufsicht der Radaufhängung gemäß der Fig. 2 und 3,
- Fig.5: eine schaubildliche Darstellung der geometrischen Lage einer Nachlaufstrecke am Hinterrad gemäß Fig. 1,
- Fig. 5a: eine schaubildliche Darstellung der geometrischen Lage einer Nachlaufstrecke am Hinterrad gemäß Fig. 1a,
- Fig. 6: eine Draufsicht zu Fig. 5 mit einer Darstellung der Verschiebungen von Querlenker und Spurstange bei Seitenkraft,
- Fig. 6a: eine Draufsicht zu Fig. 5a mit einer Darstellung der Verschiebungen von Querlenker und Spurstange bei Seitenkraft,
- Fig. 7: eine Darstellung gemäß Fig. 6 mit Radlenkpol und Seitenkraftangriff,
- Fig. 8: eine schaubildliche Darstellung des Hinterrades mit Lenkrollradius nach Fig. 1,
- Fig. 8a: eine schaubildliche Darstellung des Hinterrades mit Lenkrollradius nach Fig. 1a,
- Fig. 9: eine Draufsicht zu Fig. 8 mit Darstellung der Verschiebungen von Querlenker und Spurstange unter Einwirkung des Momentes aus Bremskraft x Lenkrollradius,
- Fig. 9a: eine Draufsicht zu Fig. 8a mit Darstellung der Verschiebungen von Querlenker und Spurstange unter Einwirkung des Momentes aus Bremskraft x Lenkrollradius,
- Fig. 10: eine Darstellung gemäß Fig. 9 mit Radlenkpol und Einwirkung des Momentes aus Bremskraft x Abstand zum Radlenkpol,
- Fig. 11: eine schaubildliche Darstellung des Hinterrades mit Störkrafthebelarm nach Fig. 1,
- Fig. 11a: eine schaubildliche Darstellung des Hinterrades mit Störkrafthebelarm nach Fig. 1a,
- Fig. 12: eine Draufsicht zu Fig. 11 mit einer Darstellung der Verschiebungen des Querlenkers und der Spurstange unter Einwirkung des Momentes aus Antriebskraft x Störkrafthebelarm,
- Fig. 12a: eine Draufsicht zu Fig. 11a mit einer Darstellung der Verschiebungen des Querlenkers und der Spurstange unter Einwirkung des Momentes aus Antriebskraft x Störkrafthebelarm, und
- Fig. 13: eine Darstellung gemäß Fig. 12 mit Radlenkpol unter Einwirkung des Momentes aus Antriebskraft x Abstand zum Radlenkpol.

Die Radaufhängung für eine Hinterachse eines Kraftfahrzeugs umfasst einen über ein Gelenk 1 am Radträger 2 und am Fahrzeugaufbau in einem Lager 1a gehaltenen Querlenker 3. Mit diesem ist eine Zugstrebe 4 über ein elastisches Lager 5 verbunden, die am Fahrzeugaufbau in einem weiteren in Strebenrichtung elastischen Lager 6 abgestützt ist. Der Querlenker 3 mit verbundener Zugstrebe 4 ist unterhalb einer Rad-Antriebswelle R angeordnet. Hinter dem Querlenker 3 - in bezug auf die Fahrtrichtung F - ist eine Spurstange 8 einerseits am Radträger 2 im Lager 9 und andererseits am Aufbau im Lager 10 angelenkt. Das elastische Lager 6 kann auch ein Gelenk sein, wobei dann das Lager 5 mit weicher radialer Kennung in Achsrichtung ausgeführt ist.

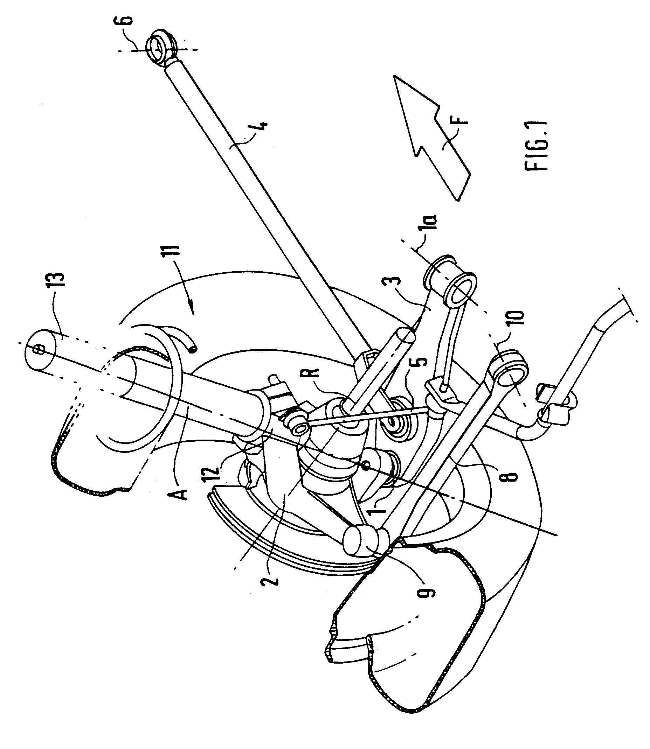

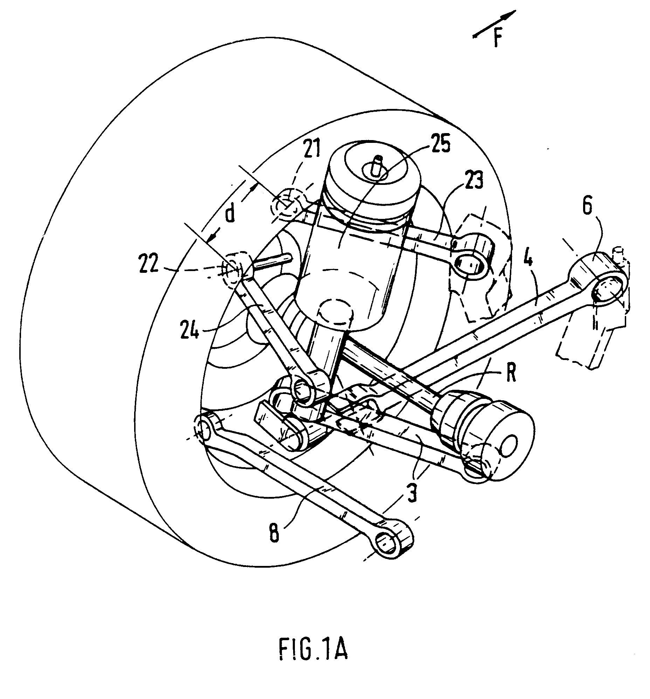

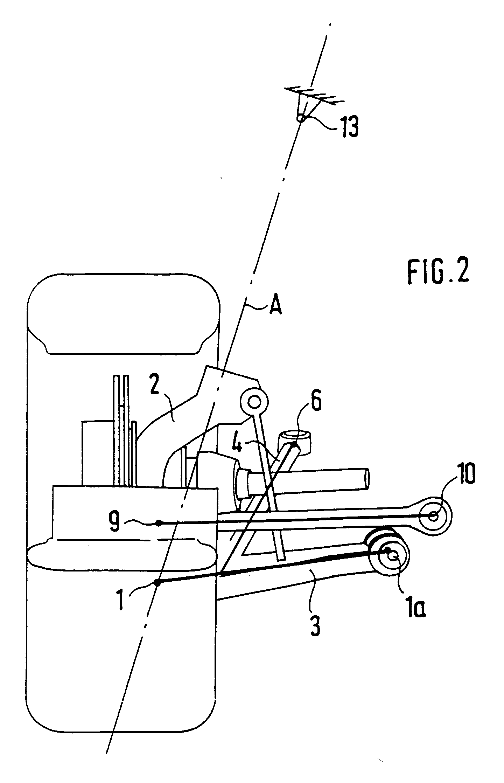

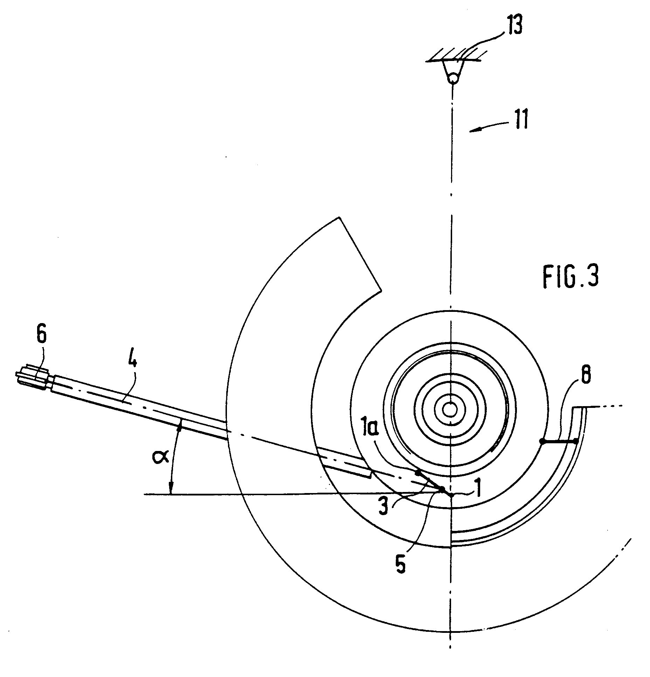

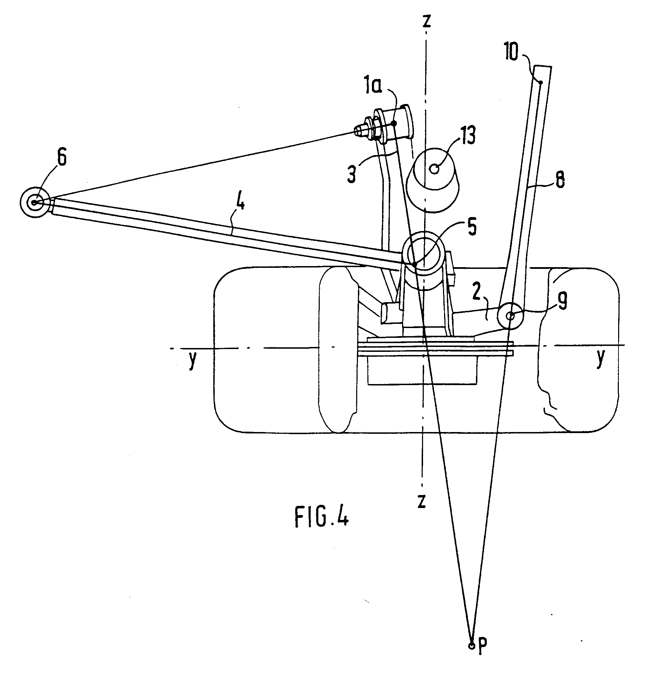

Gemäß einer ersten Ausführung nach den Fig. 1 bis 13 ist ein Federbein 11 in einer Aufnahme 12 des Radträgers 2 gehalten und stützt sich mit einem Lager 13 am Fahrzeugaufbau ab. Zwischen dem Lager 13 und dem Lager 1 des Querlenkers 3 am Radträger 2 wird eine Achse A gebildet. Diese weist einen Durchstoßpunkt X in der Radaufstandsebene - in Draufsicht und in bezug auf die Fahrtrichtung F gesehen - vor einer Radmittenquerebene z-z und außerhalb einer Radmittenlängsebene y-y bzw. der Spurweite S auf. In Höhe der Raddrehachse R bildet die Achse A einen Abstand a zur senkrechten Radmittenlängsebene y-y.

Die Zugstrebe 4 verläuft - in Seitenansicht gesehen - unter einem Winkel alpha zu einer horizontalen Ebene schräg nach vorne und nach innen zur Fahrzeuglängsmittenachse. Das aufbauseitige Lager 6 der Zugstrebe 4 liegt oberhalb der Raddrehachse R, kann aber je nach Auslegung der Achse hinsichtlich seines Antidive- und Antisquat-Verhaltens auch unterhalb dieser Achse angeordnet sein.

Der Querlenker 3 und die Spurstange 8 sind positiv zueinander angestellt und bilden mit den Verlängerungen ihrer Erstreckungsrichtung einen an der Radaußenseite angeordneten Radlenkpol P. Dieser liegt - in bezug auf die Fahrtrichtung F - hinter der senkrechten Radmittenquerebene z-z und außerhalb der Radmittenlängsebene y-y bzw. der Spurweite S.

Gemäß der weiteren Ausführung nach den Figuren 1a, 5a, 6a, 8a, 9a, 11a und 12a weist die Hinterradaufhängung statt eines Federbeines gemäß Fig. 1 in einer oberen Lenkerebene zwei aufgelöste Lenkerarme 23 und 24 auf, die am Radträger in Lagen 21 und 22 mit Abstand "RST" zueinander angelenkt sind. Zwischen diesen beiden positiv angestellten Lenkerarmen 23 und 24 ist ein Federbein 25 hindurchgeführt, das am Radträger etwa in der Ebene der Zugstrebe 4 und des Querlenkers 3 abgestützt ist. Durch die obere Lenkerebene (Lenkerarme 23, 24) wird die Lage der Achse A wesentlich beeinflußt, die gemäß der Ausführung nach Fig. 1a einen Durchstoßpunkt X in der Radaufstandsebene innerhalb der Längsmittenebene Y-Y bzw. der Spurweite S aufweist. Gleichzeitig verläuft diese Achse A in Höhe der Radmitte zu einer zur senkrechten Radmittenlängsebene Y-Y mit einem Abstand d, welcher an der Radaußenseite ausgebildet ist. Die untere Lenkerebene, bestehend aus der Zugstrebe 4, den Querlenker 3 und der Spurstange 8 bleibt im wesentlichen unverändert.

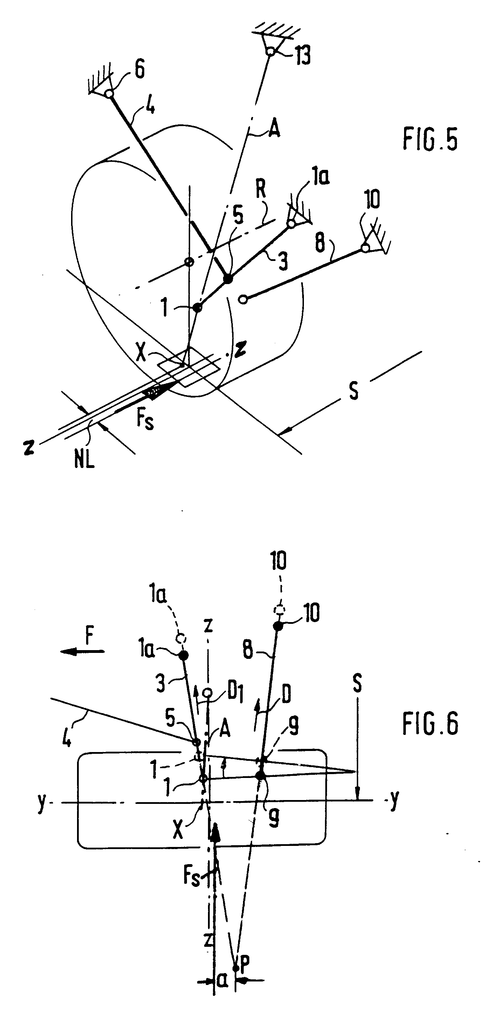

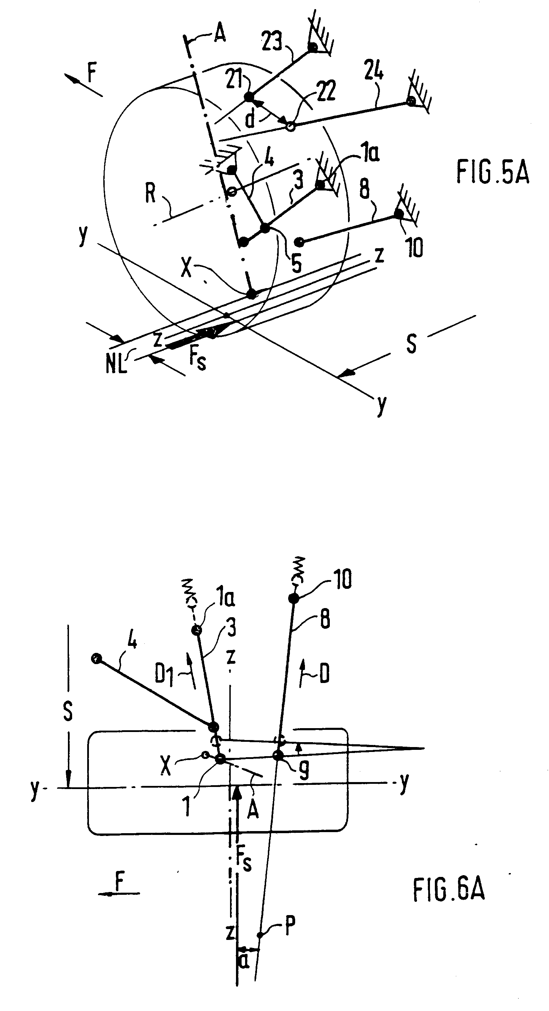

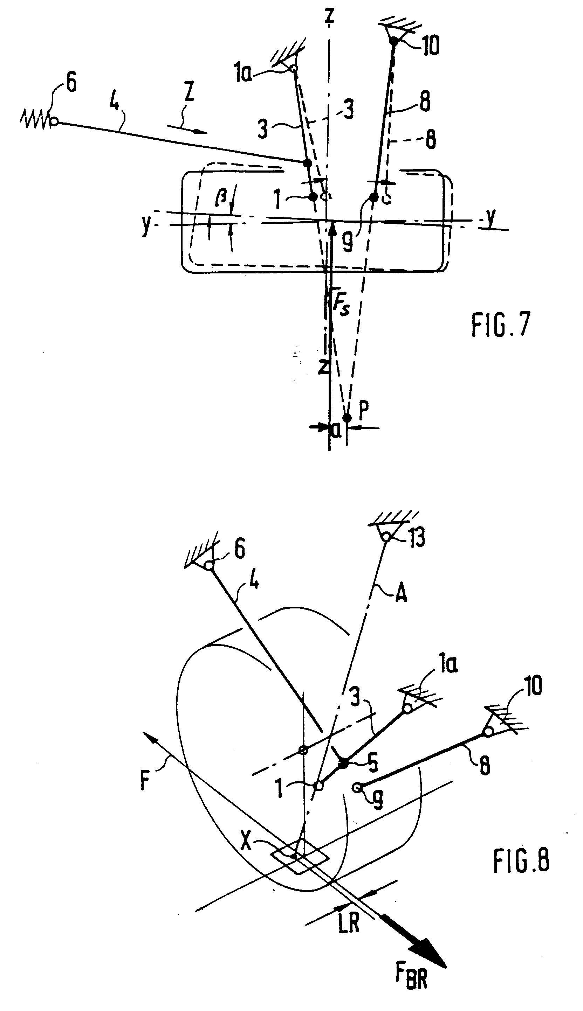

Wie in den Fig. 5 bis 7 der Ausführung gemäß Fig. 1 und der Fig. 5a und 6a der Ausführung gemäß Fig. 1a näher dargestellt, verstellt sich das Rad unter der Einwirkung von Seitenkräften Fₛ in Richtung Vorspur. Diese Radverstellung wird dadurch erreicht, daß durch das Moment, gebildet aus der Seitenkraft Fₛ x NL (wobei NL die Nachlaufstrecke darstellt) die Spurstange 8 einer geringeren Druckkraft D ausgesetzt ist als der Querlenker. Das aufbauseitige Lager 10 der Spurstange 8 gibt weniger nach innen nach als das Lager 1a des Querlenkers 3, der eine größere Druckkraft D₁ abstützen muß. Diesem Moment F_{S} x NL ist ein Moment, gebildet aus der Seitenkraft F_{S} x dem Abstand a überlagert, wobei der Abstand a zwischen der Wirkrichtung der Seitenkraft F_{S} und dem Radlenkpol P entsteht. Wie in Fig. 7 näher dargestellt, verschwenken sich der Querlenker 3 und die Spurstange 8 unter der Wirkung dieses Moments F_{S} x a entgegen der Fahrtrichtung F, wobei die Spurstange 8 und der Querlenker 3 zur besseren Darstellung als starr gelagert am Aufbau angenommen sind. Der Vorspurwinkel ist mit β eingezeichnet. Zur Verstellung von Querlenker 3 und Spurstange 8 ist es erforderlich, daß die Zugstrebe 4 ein in Zugrichtung Z relativ weiches Lager 6 aufweist. Sowie diese weich gelagerte Zugstrebe 4 im Lager 6 nachgibt, dreht sich das Rad um den Radlenkpol P in Richtung Vorspur.

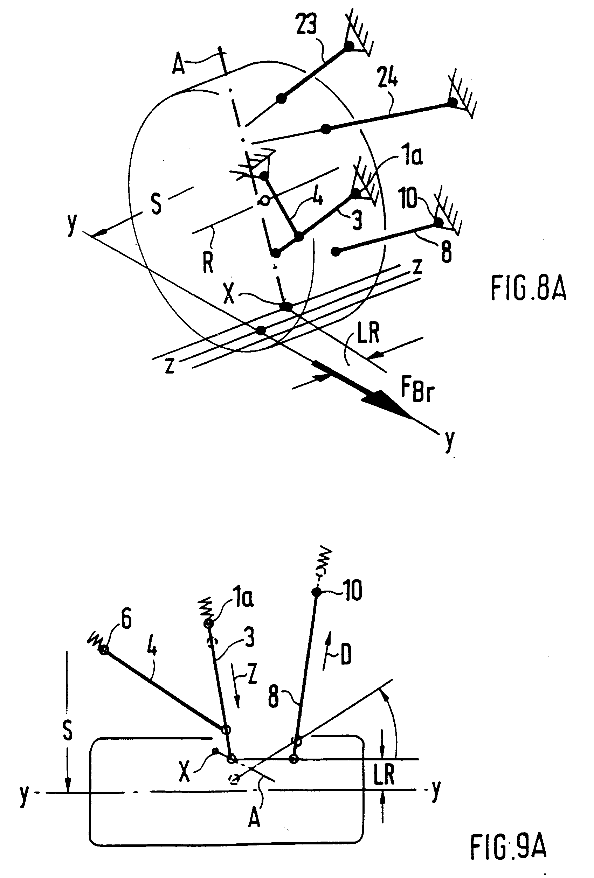

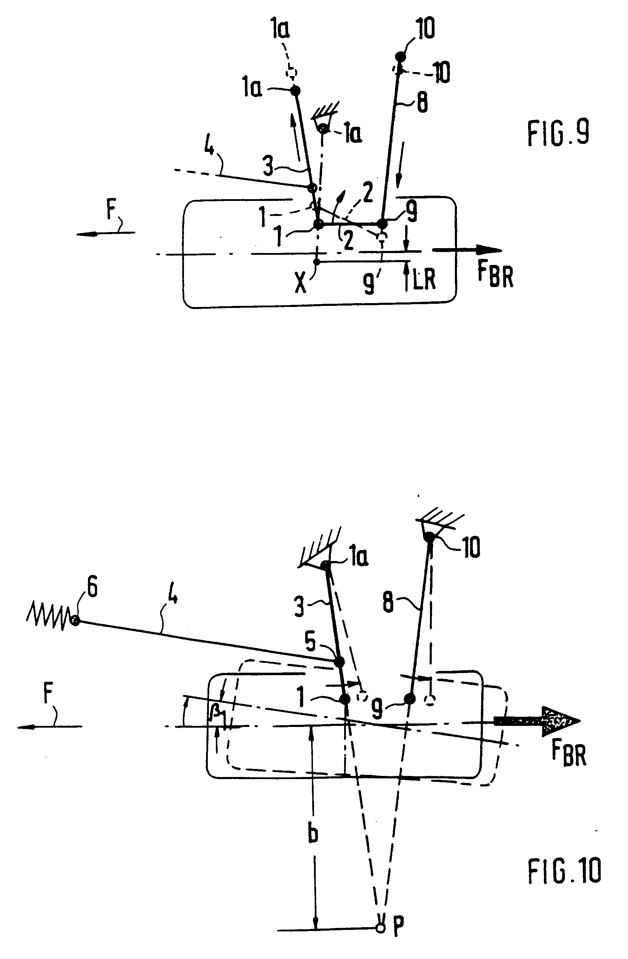

Wie in den Fig. 8 bis 10 der Ausführung gemäß Fig. 1 näher dargestellt, verstellt sich das Rad unter der Einwirkung von Bremskräften F_{BR} in Richtung Vorspur um den Winkel β₁ . Aufgrund des Moments F_{BR} x LR, wobei LR der Lenkrollradius ist, wird die Spurstange 8 gezogen bzw. auf Zug beansprucht und der Querlenker 3 gedrückt bzw. auf Druck beansprucht. Die aufbauseitigen Lager 1a und 10, die eine diesen Belastungen entsprechende Kennung aufweisen, geben gezielt nach, wodurch, wie in Fig. 10 gezeigt, der Radträger 2 und somit auch das Rad in Richtung Vorspur verstellt wird. Gleichzeitig wird diesem Moment aus F_{BR} x LR aus der Längsfederung ein Moment, gebildet aus F_{BR} x b überlagert, was in Fig. 10 bei angenommenem starr gelagertem Querlenker 3 und Spurstange 8 gezeigt ist. Dieses Moment bewirkt gleichzeitig eine Verschwenkung des Querlenkers 3 und der Spurstange 8 entgegen der Fahrtrichtung F um den Radlenkpol P ebenfalls in Richtung Vorspur.

Gemäß der weiteren Ausführung nach Fig. 1a und der Darstellungen hinsichtlich der Bremskräfte B_{R} gemäß der Fig. 8a und 9a, wird durch die Lage der Achse A und somit des Durchstoßpunktes X eine Radstellungsänderung in Richtung Nachspur erzielt. Die Achse A trifft die Radaufstandsfläche mit dem Durchstoßpunkt X innenseitig der Radmittenlängsebene Y-Y. Die Bremskraft F_{BR} bildet zu diesem Durchstoßpunkt X den Hebelarm LR. Das Moment F_{BR} x LR dreht das Rad in Nachspur, wobei die Spurstange 8 auf Druck D und der Querlenker 3 auf Zug Z beansprucht wird. Diese Nachspur ist nicht nachteilig, weil die Vorspureinstellung, bedingt durch die Längsfederung, überwiegt und im Resultat eine Vorspureinstellung erzielt wird. Diese Vorspureinstellung durch die Längsfederung wird durch das Moment F_{BR} x b erzielt (siehe Fig. 10).

Durch die Bremskraft F_{BR} werden der untere Querlenker 3 und die Spurstange 8 nach hinten - entgegen der Fahrtrichtung F - und die oberen Querlenker 23, 24 nach vorne - in Fahrtrichtung F - gedrückt. D.h., der Radträger dreht sich in Nachlaufrichtung. Der radträgerseitige Lagerpunkt der Spurstange bewegt sich dabei nach oben, d.h. von der Radaufstandsfläche weg. Je nach dem, wie beim Bremsen die Spurstange in einer Ansicht von hinten - in Fahrtrichtung F - steht, geht der Lagerpunkt nach innen oder außen und somit wird das Rad in Nach- oder Vorspur verstellt. Aufgrund des geringen Abstandes zwischen der unteren und der oberen Ebene der Lenker ist eine Nachlaufwinkeländerung relativ groß.

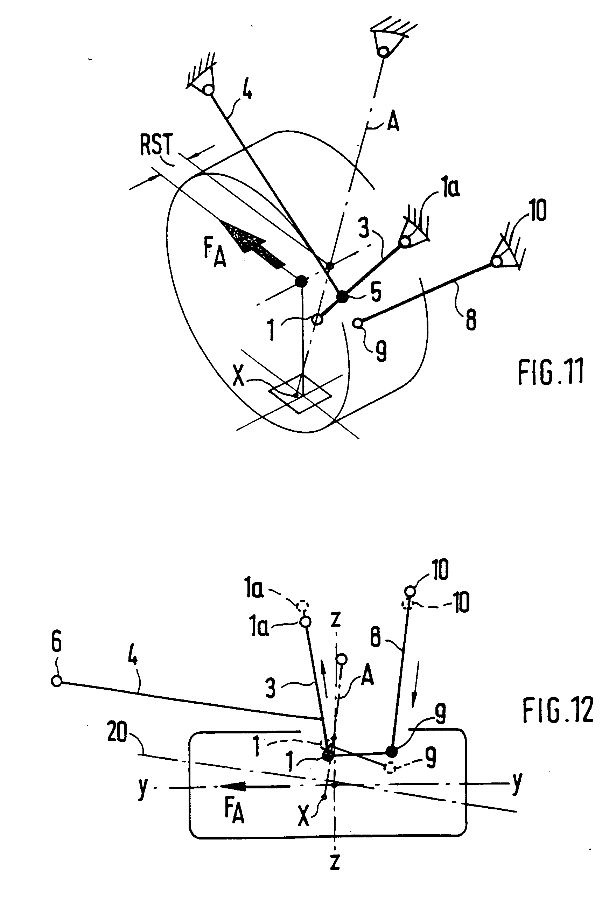

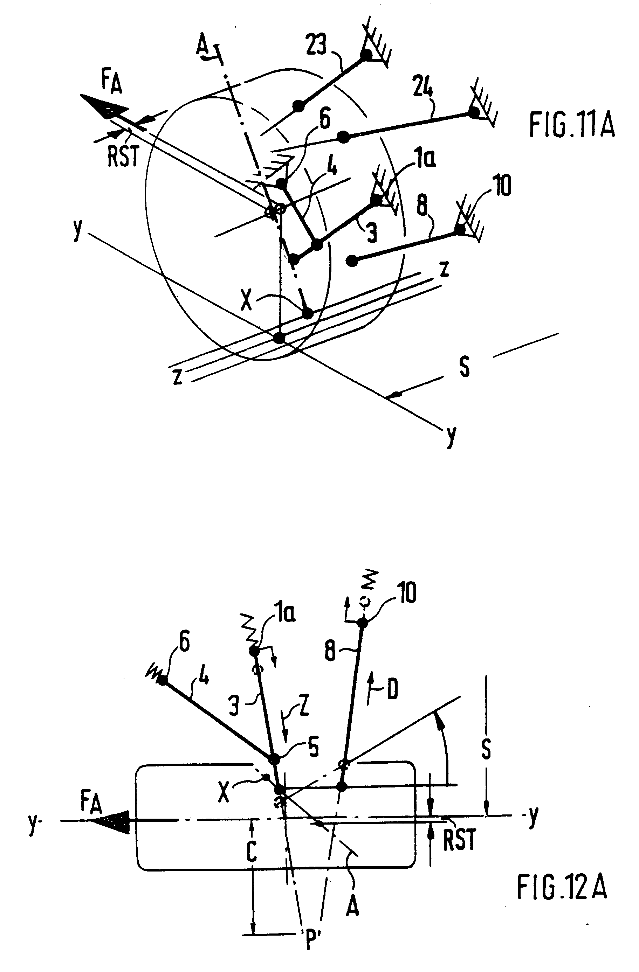

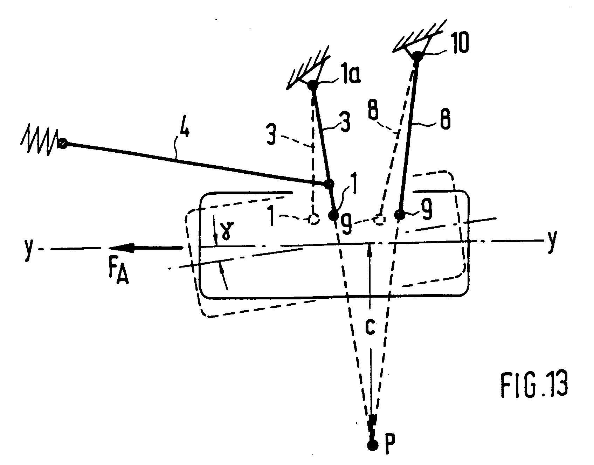

Wie in den Fig. 11 bis 13 der Ausführung gemäß Fig. 1 näher dargestellt ist, verstellt sich das Rad unter der Einwirkung von Antriebskräften F_{A} und einem hieraus gebildeten Moment F_{A} x RST in Richtung Vorspur, wobei RST der Abstand von der Achse A zur senkrechten Radmittellängsebene y-y in Höhe der Raddrehachse R darstellt. Bei dieser Verstellung wird durch die elastische Kennung der aufbauseitigen Lager 1a und 10 des Querlenkers 3 und der Spurstange 8 die Spurstange 8 gezogen und der Querlenker 3 gedrückt, wodurch der Radträger 2 eine Stellung gemäß der strichpunktierten Linien 20 einnehmen würde, wenn nicht ein Gegenmoment aus der Längsfederung, wie in Fig. 13 dargestellt, gebildet aus der Antriebskraft F_{A} x c, auf das Rad wirken würde, wobei c der Abstand zwischen dem Radlenkpol P und der Radmittenlängsebene y-y ist. Wenn die Zugstrebe in ihrem elastischen Lager 6 unter Antriebskraft nach vorne nachgibt, kann die Antriebskraft F_{A} das Rad um den Radlenkpol P elastokinematisch in Nachspur verschwenken und die "falsche" Vorspuränderung durch das Moment F_{A}x. RST wird umgekehrt. In Fig. 13 ist die Schwenkbewegung des Querlenkers 3 und der Spurstange 8 bei angenommenen starren Lagern 1a und 10 gezeigt, woraus ersichtlich ist, daß der Querlenker 3 und die Spurstange 8 sich nach vorn in Fahrtrichtung F verschwenken können. Diese Bewegung ist der Bewegung des Querlenkers und der Spurstange überlagert.

Gemäß der Ausführung nach Fig. 1a und der Darstellung hinsichtlich der Antriebskräfte F_{A} gemäß der Fig. 11a und 12a liegt die Achse A in Höhe der Raddrehachse R innerhalb der senkrechten Radmittenlängsebene y-y mit dem Abstand RST, auch negativer Störkrafthebelarm genannt. Das Moment F_{A} x RST dreht das Rad geringfügig in Nachspur, wobei die Spurstange 8 auf Druck D und der Querlenker 3 auf Zug Z beansprucht wird. Durch eine gleichzeitig auftretende Längsfederung (Fig. 13) wird diese Nachspuränderung noch verstärkt, da der Radlenkpol P außerhalb der Spurweite liegt und ein Moment F_{A} x C aufgebaut wird.

Beim Beschleunigen in der Kurve verstärkt sich ein Untersteuern. Wenn das kurvenäußere Rad in Nachspur geht wird das Untersteuern wieder etwas abgebaut. Außerdem geht durch diese Elastokinematikfunktion bei Gaswegnahme (Lastwechsel) in Richtung Vorspur und es wird somit einem Eindrehen entgegengewirkt.

## Patentansprüche

1. Radaufhängung für eine Achse eines Kraftfahrzeuges, insbesondere eine McPherson-Hinterachse mit einem an einem Radträger (2) fest befestigten McPherson-Federbein (11), mit einem Querlenker und einer an diesem angelenkten Zugstrebe (4), wobei der Querlenker (3) am Radträger (2) über ein Gelenk (1) gehalten ist und die aufbauseitigen Lager (1a; 6) des Querlenkers (3) und der Zugstrebe (4) sowie des Verbindungslagers (5) zwischen Querlenker (3) und Zugstrebe (4) mit einer definierten Kennung zur elastokinematischen Verstellung des Rades unter Einwirkung von auf das Rad einwirkenden Seiten- und Umfangskräften (Fₛ, F_{Br}, F_{A}) ausgeführt sind und der Querlenker (3) mit verbundener Zugstrebe (4) unterhalb einer Rad-Antriebswelle (R) und - in bezug auf die Fahrtrichtung (F) - vor einer Spurstange (8) angeordnet ist und die Zugstrebe (4) - in Draufsicht gesehen - schräg nach vorn verläuft, **dadurch gekennzeichnet**, daß der Querlenker (3) und die Spurstange (8) außerhalb der Spurweite (S) und hinter der Radmittenquerebene (z-z) liegenden Radlenkpol (P) ergeben und daß sich vor der Radmittenquerebene (z-z) und außerhalb der Radmittenlängsebene (y-y) ein Durchstoßpunkt (X) einer durch das radträgerseitige Gelenk (1) des Querlenkers (3) und dem aufbauseitigen Lager (13) des McPherson-Federbeins (11) verlaufende Achse (A) ergibt und daß zur Vorspureinstellung des kurvenäußeren Rads unter Seitenkraft (Fₛ) die Spurstange (8) sowie der Querlenker (3) am Fahrzeugaufbau jeweils über ein etwa gleich hartes elastisches Lager (10; 1a) abgestützt sind, wobei ein Seitenkrafteingriff außermittig der beiden aufbauseitigen Lager (1a; 10) liegt, und daß zur Vorspureinstellung beim Bremsen (F_{Br}) die Zugestrebe (4) mit einem am Fahrzeugaufbau in Richtung der Zugstrebenachse relativ zu den aufbauseitigen Lagern (1a; 10) des Querlenkers (3) und der Spurstange (8) weich ausgebildetes Lager (6) versehen ist, und daß die Radstellungsänderung bei einer Antriebskraft (F_{A}) in Richtung Nachspur und bei einem Lastwechsel in Richtung Vorspur ist, wobei die Lagen der Achse (A) und des Radlenkpols (P) derart sind, daß bei einer Antriebskraft (F_{A}) der Querlenker (3) unter Druck und die Spurstange (8) unter Zug verlagerbar ist.

2. Radaufhängung für eine Achse eines Kraftfahrzeuges mit einem Querlenker (3) und einer an diesem angelenkten Zugstrebe (4), wobei der Querlenker (3) am Radträger (2) über ein Gelenk gehalten ist und die aufbauseitigen Lager (1a, 4) des Querlenkers (3) und der Zugstrebe (4) sowie des Verbindungslagers (5) zwischen Querlenker (3) und Zugstrebe (4) mit einer definierten Kennung zur elastokinematischen Verstellung des Rades unter Einwirkung von auf das Rad einwirkenden Seiten- und Umfangskräften (Fₛ, F_{Br}, F_{A}) ausgeführt sind und unterhalb der Radantriebswelle (R) der Querlenker (3) mit verbundener Zugstrebe (4) angeordnet ist und der Querlenker (3) mit der Zugstrebe (4) - in bezug auf die Fahrtrichtung (F) - vor einer Spurstange (8) liegt und die Zugstrebe (4) - in Draufsicht gesehen - schräg nach vorn verläuft und oberhalb der Radantriebswelle (R) einer Lenkerabstützung vorgesehen ist, **dadurch gekennzeichnet**, daß die Radaufhängung oberhalb einer Radantriebswelle (R) zwei aufgelöste und am Radträger mit Abstand (d) in Lagern (21, 22) gehaltene Lenkerarme (23, 24) aufweist, zwischen denen ein am Radträger abgestütztes Dämpferbein (25) angeordnet ist und , wobei der Querlenker (3) und die Spurstange (8) einen außerhalb der Spurweite (S) und hinter der Radmittenquerebene (z-z) liegenden Radlenkpol (P) ergeben und daß sich vor der Radmittenquerebene (z-z) und innerhalb der Radmittenlängsebene (y-y) ein Durchstoßpunkt (X) durch die Radaufstandsfläche einer durch das radträgerseitige Gelenk (1) des Querlenkers (3) und einer von den aufgelösten Lenkerarmen gebildeten ideellen Pol verlaufende Achse (A) ergibt und daß zur Vorspureinstellung des kurvenäußeren Rads unter Seitenkraft (Fₛ) die Spurstange (8) sowie der Querlenker (3) am Fahrzeugaufbau jeweils über ein etwa gleich hartes elastisches Lager (10; 1a) abgestützt sind, wobei ein Seitenkrafteingriff außermittig der beiden aufbauseitigen Lager (1a; 10) liegt, und daß zur Vorspureinstellung beim Bremsen (F_{Br}) die Zugestrebe (4) mit einem am Fahrzeugaufbau in Richtung der Zugstrebenachse relativ zu den aufbauseitigen Lagern (1a; 10) des Kurvenlenkers (3) und der Spurstange (8) weich ausgebildetes Lager (6) versehen ist, und daß die Radstellungsänderung bei einer Antriebskraft (F_{A}) in Richtung Nachspur und bei einem Lastwechsel in Richtung Vorspur ist, wobei die Lage der Achse (A) und des Radlenkpols (P) derart sind, daß bei einer Antriebskraft (F_{A})der Querlenker (3) unter Zug und die Spurstange (8) unter Druck verlagerbar ist.

3. Radaufhängung nach den Ansprüchen 1 oder 2, **dadurch gekennzeichnet**, daß der Querlenker (3) ein elastisches Lager (1a) am Fahrzeugaufbau - in bezug auf die Fahrtrichtung (F) - vor der Raddrehachse (R) aufweist und das Gelenk (1) am Radträger (2) annähernd in der senkrechten Radmittenquerebene (z-z) liegt.

4. Radaufhängung nach den Ansprüchen 1 oder 3, **dadurch gekennzeichnet,** daß die Zugstrebe (4) - in Seitenansicht gesehen - unter einem Winkel (alpha) zu einer horizontalen Ebene schräg nach oben vorn - in bezug auf die Fahrtrichtung (F) - verläuft und ein Lager (6) am Fahrzeugaufbau oberhalb einer durch die Raddrehachse (R) verlaufenden horizontalen Ebene liegt.

5. Radaufhängung nach den Ansprüchen 1 oder 2, **dadurch gekennzeichnet**, daß die Zugstrebe (4) - in Seitenansicht gesehen - unter einem Winkel (alpha) zu einer horizontalen Ebene schräg nach oben vorn - in bezug auf die Fahrtrichtung (F) - verläuft und ein Lager (6) am Fahrzeugaufbau unterhalb einer durch die Raddrehachse (R) verlaufenden horizontalen Ebene liegt.

6. Radaufhängung nach den Ansprüchen 3, 4 oder 5, **dadurch gekennzeichnet**, daß die Spurstange (8) am Fahrzeugaufbau ein härteres elastisches Lager (10) aufweist als das elastische Lager (1a) des Querlenkers (3) am Fahrzeugaufbau, derart, daß bei einer Seitenkraft (F_{S}) auf das kurvenäußere Rad durch ein Moment aus F_{S} x NL zwischen der Achse A und der Wirkrichtung der Seitenkraft F_{S} ein Moment aus F_{S} x a überlagert ist und die Spurstange (8) einer geringeren Druckkraft ausgesetzt ist als der Querlenker (3) und das Rad in Richtung Vorspur verstellbar ist.

7. Radaufhängung nach den Ansprüchen 1,2 und 6, **dadurch gekennzeichnet,** daß der Querlenker (3) und die Spurstange (8) am Fahrzeugaufbau in Lagern (1a, 10) von etwa gleich harter radialer Kennung gelagert sind und sich bei Seitenkraft (F_{S}) ein Moment aus F_{S} x a zwischen der Wirkrichtung der Seitenkraft( F_{S} ) und dem Radlenkpol (P) einstellt und das Rad in Richtung Vorspur um den Radlenkpol verstellbar ist, wobei die Zugstrebe (4) am Fahrzeugaufbau in einem Lager (6) mit weicherer Kennung in Achsrichtung gelagert ist.

8. Radaufhängung nach den Ansprüchen 1, 2, 3, 4, 5, 6 oder 7, **dadurch gekennzeichnet**, daß die Spurstange (8), der Querlenker (3) und die über ein elastisches Lager (5) gelenkig angebundene Zugstrebe (4) mit einem am Fahrzeugaufbau in Richtung der Zugstrebenachse weich ausgebildeten Lager (6) abgestützt ist und zur Erzielung einer Vorspureinstellung beim Bremsen am Fahrzeugaufbau derart elastisch in Lagern (10; 1a und 6) gehalten sind, daß durch ein Moment, gebildet aus F_{Br} x LR, wobei der Hebelarm (LR) außerhalb der Spurweite (S) liegt und das Rad in Richtung Vorspur verstellbar ist, wobei der Querlenker (3) auf Druck und die Spurstange (8) auf Zug beanspruchbar ist und dieses Moment gleichzeitig von einem Moment aus der Längsfederung, gebildet aus F _{Br} x b, ergänzt wird.

9. Radaufhängung nach den Ansprüchen 2, 3, 4, 5, 6 oder 7, **dadurch gekennzeichnet**, daß die Spurstange (8), der Querlenker (3) und die über ein elastisches Lager (5) gelenkig angebundene Zugstrebe (4) mit einem am Fahrzeugaufbau in Richtung der Zugstrebenachse weich ausgebildeten Lager (6) abgestützt ist und zur Erzielung einer Vorspureinstellung beim Bremsen am Fahrzeugaufbau derart elastisch in Lagern (10; 1a und 6) gehalten sind, daß durch ein Moment, gebildet aus F_{BR} x LR, wobei der Hebelarm (LR) innerhalb der Spurweite (S) liegt und das Rad in Richtung Nachspur verstellbar ist, wobei der Querlenker (3) auf Zug (Z) und die Spurstange (8) auf Druck (D) beanspruchbar ist und dieses Moment gleichzeitig von einem Moment aus der Längsfederung, gebildet aus F_{BR} x b überlagert wird.

10. Radaufhängung nach Anspruch 1, 2 und 9, **dadurch gekennzeichnet**, daß das Lager (6) der Zugstrebe eine die Vorspureinstellung insgesamt begrenzende Kennung aufweist.

11. Radaufhängung nach den Ansprüchen 1, 2, 3, 4, 5, 6, 7, 8, 9 oder 10, **dadurch gekennzeichnet**, daß die Achse (A) in Höhe der Raddrehachse (R) im Abstand (RST) zur Wirkrichtung der Antriebskraft ( F_{A}) angeordnet ist und die aufbauseitigen Lager (1a und 10) eine derartige Elastizität aufweisen, daß durch das Moment F_{A} x RST der Querlenker (3) auf Druck und die Spurstange (8) auf Zug beanspruchbar ist, wobei der Hebelarm (RST) innerhalb der Spurweite (S) liegt und das Rad in Richtung Vorspur verstellt wird und dieser Vorspureinstellung einer Nachspureinstellung durch das Moment F_{A} x c um den Radlenkpol (P) überlagert ist, so daß bei Antriebskraft (F_{A}) insgesamt eine Radstellungsänderung in Richtung Nachspur und bei Lastwechsel in Richtung Vorspur erfolgt, wobei die Zugstrebe (4) am Fahrzeugaufbau in dem in Richtung der Zugstrebenachse weich ausgebildeten Lager (6) abgestützt ist.

12. Radaufhängung nach den Ansprüchen 2, 3, 4, 5, 6, 7, 8, 9 oder 10, **dadurch gekennzeichnet**, daß die Achse (A) in Höhe der Raddrehachse (R) im Abstand (RST) zur Wirkrichtung der Antriebskraft (F_{A}) angeordnet ist und die aufbauseitigen Lager (1a und 10) eine derartige Elastizität aufweisen, daß durch das Moment F_{A} x RST der Querlenker (3) auf Zug und die Spurstange (8) auf Druck beanspruchbar ist, wobei der Hebelarm (RST) außerhalb der Spurweite (S) liegt und das Rad in Richtung Nachspur verstellt wird und dieser Nachspureinstellung eine zusätzliche Nachspureinstellung durch das Moment F_{A} x c um den Radlenkpol (P) überlagert ist, so daß bei Antriebskraft (F_{A}) insgesamt eine Radstellungsänderung in Richtung Nachspur und bei Lastwechsel in Richtung Vorspur erfolgt, wobei die Zugstrebe (4) am Fahrzeugaufbau in dem in Richtung der Zugstrebenachse weich ausgebildeten Lager (6) abgestützt ist.

## Claims

1. A wheel suspension for an axle of a motor vehicle, in particular a McPherson rear axle with a McPherson strut (11) firmly secured to a wheel support (2), with a transverse control arm and a tension strut (4) articulated thereto, wherein the transverse control arm (3) is held on the wheel support (2) by way of a joint (1), and the bearings (1a; 6) - on the body - of the transverse control arm (3) and of the tension strut (4) as well as of the connecting bearing (5) between the transverse control arm (3) and the tension strut (4) are designed with a defined characteristic with respect to the elastokinematic displacement of the wheel under the action of lateral and peripheral forces (**F**_{**S**}, **F**_{**Br**}, **F**_{**A**}) acting upon the wheel, and the transverse control arm (3) with the attached tension strut (4) is arranged below a wheel drive shaft (**R**) and - with respect to the direction of travel (**F**) - in front of a tie rod (8), and - as seen in plan view - the tension strut (4) extends obliquely forwards, **characterized in that** the transverse control arm (3) and the tie rod (8) form [a] wheel-steering pole (**P**) situated outside the track width (**S**) and behind the wheel-centre transverse plane (**z-z**), and a point of intersection (**X**) of an axis (**A**) extending through the joint (1) of the transverse control arm (3) on the wheel support and the bearing (13) of the McPherson strut (11) on the body is formed in front of the wheel-centre transverse plane (**z-z**) and outside the wheel-centre longitudinal plane (**y-y**), and in order to set the toe-in of the wheel on the outside curve under lateral force (**F**_{**S**}) the tie rod (8) and the transverse control arm (3) are supported on the vehicle body by way of a respective resilient bearing (10; 1a) of substantially equal rigidity in each case, wherein an engagement of lateral forces takes place outside the centres of the two bearings (1a; 10) on the body, and in order to set the toe-in during braking (**F**_{**Br**}) the tension strut (4) is provided with a bearing (6) designed to be yielding on the vehicle body in the direction towards the tension-strut axis relative to the bearings (1a; 10) of the transverse control arm (3) and the tie rod (8) on the body, and the wheel-setting change is in the toe-out direction with a driving force (**F**_{**A**}) and in the toe-in direction during a load change, wherein the positions of the axis (**A**) and of the wheel-steering pole (**P**) are such that with a driving force (**F**_{**A**}) the transverse control arm (3) is displaceable under pressure and the tie rod (8) is displaceable under tension.

2. A wheel suspension for an axle of a motor vehicle, with a transverse control arm and a tension strut (4) articulated thereto, wherein the transverse control arm (3) is held on the wheel support (2) by way of a joint and the bearings (1a, 6) - on the body - of the transverse control arm (3) and of the tension strut (4) as well as of the connecting bearing (5) between the transverse control aim (3) and the tension strut (4) are designed with a defined characteristic with respect to the elastokinematic displacement of the wheel under the action of lateral and peripheral forces (**F**_{**S**}, **F**_{**B**}ᵣ, **F**_{**A**}) acting upon the wheel and the transverse control arm (3) with the attached tension strut (4) is arranged below the wheel drive shaft (**R**), and the transverse control arm (3) together with the tension strut (4) is situated - with respect to the direction of travel (**F**) - in front of a tie rod (8), and - as seen in plan view - the tension strut (4) extends obliquely forwards and is provided above the wheel drive shaft (**R**) of a control-arm support, **characterized in that** above a wheel drive shaft (**R**) the wheel suspension comprises two detached control arms (23, 24) which are held spaced at a distance (**d**) in bearings (21, 22) on the wheel support and between which a shock-absorbing strut (25) supported on the wheel support is arranged, wherein the transverse control arm (3) and the tie rod (8) form a wheel-steering pole (**P**) situated outside the track width (**S**) and behind the wheel-centre transverse plane (**z-z**), and a point of intersection (**X**) through the wheel-contact area of an axis (**A**) extending through the joint (1) of the transverse control arm (3) on the wheel support and an imaginary pole formed by the detached control arms is formed in front of the wheel-centre transverse plane (**z-z**) and inside the wheel-centre longitudinal plane (**y-y**), and in order to set the toe-in of the wheel on the outside curve under lateral force (**F**_{**S**}) the tie rod (8) and the transverse control arm (3) are supported on the vehicle body by way of a respective resilient bearing (10; 1a) of substantially equal rigidity in each case, wherein an engagement of lateral forces takes place outside the centres of the two bearings (1a; 10) on the body, and in order to set the toe-in during braking (**F**_{**Br**}) the tension strut (4) is provided with a bearing (6) designed to be yielding on the vehicle body in the direction towards the tension-strut axis relative to the bearings (1a; 10) of the curving control arm (3) and the tie rod (8) on the body, and the wheel-setting change is in the toe-out direction with a driving force (**F**_{**A**}) and in the toe-in direction during a load change, wherein the position[s] of the axis (**A**) and of the wheel-steering pole (**P**) are such that with a driving force (**F**_{**A**}) the transverse control arm (3) is displaceable under tension and the tie rod (8) is displaceable under pressure.

3. A wheel suspension according to Claim 1 or 2, **characterized in that** the transverse control arm (3) has a resilient bearing (1a) on the vehicle body in front of the wheel rotation axis (**R**) with respect to the direction of travel (**F**), and the joint (1) is situated on the wheel support (2) substantially in the vertical wheel-centre transverse plane (**z-z**).

4. A wheel suspension according to Claim 1 or 3, **characterized in that** - as seen in a lateral view - the tension strut (4) extends obliquely upwards and forwards - with respect to the direction of travel (**F**) - at an angle (α) to a horizontal plane, and a bearing (6) on the vehicle body is situated above a horizontal plane extending through the wheel rotation axis (**R**).

5. A wheel suspension according to Claim 1 or 2, **characterized in that** - as seen in a lateral view - the tension strut (4) extends obliquely upwards and forwards - with respect to the direction of travel (**F**) - at an angle (α) to a horizontal plane, and a bearing (6) on the vehicle body is situated below a horizontal plane extending through the wheel rotation axis (**R**).

6. A wheel suspension according to Claim 3, 4 or 5, **characterized in that** the tie rod (8) on the vehicle body has a more rigid resilient bearing (10) than the resilient bearing (1a) of the transverse control arm (3) on the vehicle body in such a way that with a lateral force (**F**_{**S**}) upon the wheel on the outside curve a moment of **F**_{**S**} **× NL** between the axis **A** and the effective direction of the lateral force **F**_{**S**} is superimposed upon a moment of **F**_{**S**} **× a**, and the tie rod (8) is subjected to a lower pressing force than the transverse control arm (3) and the wheel in the toe-in direction.

7. A wheel suspension according to Claims 1, 2 and 6, **characterized in that** the transverse control arm (3) and the tie rod (8) are mounted on the vehicle body in bearings (1a, 10) with a radial characteristic of substantially equal rigidity, and with a lateral force (**F**_{**S**}) a moment of **F**_{**S**} **× a** is set between the effective direction of the lateral force (**F**_{**S**}) and the wheel-steering pole (**P**), and the wheel is displaceable about the wheel-steering pole in the toe-in direction, wherein the tension strut (4) is mounted on the vehicle body in a bearing (6) with a more yielding characteristic in the axial direction.

8. A wheel suspension according to Claim 1, 2, 3, 4, 5, 6 or 7, **characterized in that** the tie rod (8), the transverse control arm (3) and the tension strut (4) articulated by way of a resilient bearing (5) [are] supported by a bearing (6) designed to be yielding in the direction of the tension-strut axis on the vehicle body and, in order to achieve a toe-in setting during braking, they are held resiliently in bearings (10; 1a and 6) on the vehicle body in such a way that by a moment formed from **F**_{**Br**} **× LR**, wherein the lever arm (**LR**) is situated outside the track width (**S**) and the wheel is displaceable in the toe-in direction, wherein the transverse control arm (3) can be acted upon with pressure and the tie rod (8) with tension and the said moment is increased at the same time by a moment from the longitudinal springing formed from **F**_{**Br**} **× b**.

9. A wheel suspension according to Claim 2, 3, 4, 5, 6 or 7, **characterized in that** the tie rod (8), the transverse control arm (3) and the tension strut (4) articulated by way of a resilient bearing (5) [are] supported by a bearing (6) designed to be yielding in the direction of the tension-strut axis on the vehicle body and, in order to achieve a toe-in setting during braking, they are held resiliently in bearings (10; 1a and 6) on the vehicle body in such a way that by a moment formed from **F**_{**Br**} **× LR**, wherein the lever arm (**LR**) is situated inside the track width (**S**) and the wheel is displaceable in the toe-out direction, wherein the transverse control arm (3) can be acted upon with tension (**Z**) and the tie rod (8) with pressure (**D**) and the said moment has superimposed thereon at the same time a moment from the longitudinal springing formed from **F**_{**Br**} **× b**.

10. A wheel suspension according to Claims 1, 2 and 9, **characterized in that** the bearing (6) of the tension strut has a characteristic defining the toe-in setting as a whole.

11. A wheel suspension according to Claim 1, 2, 3, 4, 5, 6, 7, 8, 9 or 10, **characterized in that** the axis (**A**) is situated at the level of the wheel rotation axis (**R**) at a distance (**RST**) from the effective direction of the driving force (**F**_{**A**}) and the bearings (1a and 10) on the body have a degree of resilience such that the transverse control arm (3) can be acted upon with pressure and the tie rod (8) with tension by the moment **F**_{**A**} **× RST**, wherein the lever arm (**RST**) is situated inside the track width (**S**) and the wheel is displaced in the toe-in direction, and the said toe-in setting has superimposed thereon a toe-out setting by the moment **F**_{**A**} **× c** about the wheel-steering pole (**P**), so that, taken as a whole, a wheel-setting change takes place in the toe-out direction with a driving force (**F**_{**A**}) and in the toe-in direction with a load change, wherein the tension strut (4) is supported on the vehicle body in the bearing (6) designed to be yielding in the direction of the tension-strut axis.

12. A wheel suspension according to Claim 2, 3, 4, 5, 6, 7, 8, 9 or 10, **characterized in that** the axis (**A**) is situated at the level of the wheel rotation axis (**R**) at a distance (**RST**) from the effective direction of the driving force (**F**_{**A**}) and the bearings (1a and 10) on the body have a degree of resilience such that the transverse control arm (3) can be acted upon with tension and the tie rod (8) with pressure by the moment **F**_{**A**} **× RST**, wherein the lever arm (**RST**) is situated outside the track width (**S**) and the wheel is displaced in the toe-out direction, and the said toe-out setting has superimposed thereon an additional toe-out setting by the moment **F**_{**A**} **× c** about the wheel-steering pole (**P**), so that, taken as a whole, a wheel-setting change takes place in the toe-out direction with a driving force (**F**_{**A**}) and in the toe-in direction with a load change, wherein the tension strut (4) is supported on the vehicle body in the bearing (6) designed to be yielding in the direction of the tension-strut axis.

## Revendications

1. Suspension de roue pour un essieu d'un véhicule automobile, en particulier un essieu arrière Mc-Pherson avec une jambe de force à ressort Mc-Pherson (11), fixée fixement sur un support de roue (2), avec un bras oscillant transversal et un tirant (4) articulé sur celui-ci, le bras oscillant transversal (3) étant maintenu sur le support de roue (2), par une articulation (1) et les paliers (1a ; 6) côté carrosserie du bras oscillant transversal (3) et du tirant (4) ainsi que le palier de liaison (5) entre le bras oscillant transversal (3) et le tirant (4), étant réalisés avec une caractéristique définie pour le déplacement élasto-cinématique de la roue, sous l'effet de forces latérales et périphériques (Fₛ, FBᵣ, F_{A}) agissant sur la roue et le bras oscillant transversal (3) avec tirant (4) relié est placé au-dessous d'un arbre d'entraînement de roue (R) et devant - par rapport au sens de marche (F) - une barre d'accouplement (8) et le tirant (4) - vu de dessus - s'étend obliquement vers l'avant, caractérisée en ce que le bras oscillant transversal (3) et la barre d'accouplement (8) donnent un pôle de direction de roue (T), situé à l'extérieur de l'écartement des roues (S) et derrière le plan transversal médian de roue z-z et en ce que devant le plan transversal médian de roue z-z et à l'extérieur du plan longitudinal médian de roue y-y, on obtient un point de percée (X) d'un axe (A) passant par l'articulation (1) côté support de roue du bras oscillant transversal (3) et le palier (13) côté carrosserie de la jambe de force à ressort Mc-Pherson (11), et en ce que pour le réglage du pincement de la roue extérieure à la courbe sous la force latérale (Fₛ), la barre d'accouplement (8) ainsi que le bras oscillant transversal (3) sont soutenus sur la carrosserie du véhicule, chacun par un palier élastique (10 ; 1a) à peu près aussi dur, une intervention de force latérale se situant à l'extérieur du milieu des deux paliers (1a ; 10) côté carrosserie, et en ce que pour le réglage du pincement lors du freinage (F_{Br}), le tirant (4) est pourvu d'un palier (6) souple sur la carrosserie du véhicule, en direction de l'axe du tirant, par rapport aux paliers (1a ; 10) côté carrosserie du bras oscillant transversal (3) et de la barre d'accouplement (8), et en ce que la variation de la position de la roue se fait dans le sens d'une ouverture dans le cas d'une force d'entraînement (F_{A}) et dans le sens d'un pincement, dans le cas d'un changement de charge, les positions de l'axe (A) et du pôle de direction de roue (B) étant telles que dans le cas d'une force d'entraînement (F_{A}), le bras oscillant transversal (3) est déplaçable sous compression et la barre d'accouplement (8), sous traction.

2. Suspension de roue pour un essieu d'un véhicule automobile en particulier un essieu arrière Mc-Pherson avec une jambe de force à ressort Mc-Pherson (11), fixée fixement sur un support de roue (2), avec un bras oscillant transversal et un tirant (4) articulé sur celui-ci, le bras oscillant transversal (3) étant maintenu sur le support de roue (2), par une articulation (1) et les paliers (1a, 4) côté carrosserie du bras oscillant transversal (3) et du tirant (4) ainsi que le palier de liaison (5) entre le bras oscillant transversal (3) et le tirant (4), étant réalisés avec une caractéristique définie pour le déplacement élasto-cinématique de la roue, sous l'effet de forces latérales et périphériques (Fₛ, FBᵣ, F_{A}) et le bras oscillant transversal (3) avec tirant (4) relié est placé au-dessous de l'arbre d'entraînement de roue (R) et le bras oscillant transversal (3) avec le tirant (4) est situé devant - par rapport au sens de marche (F) - une barre d'accouplement (8) et le tirant (4) - vu de dessus - s'étend obliquement vers l'avant et est prévu au-dessus de l'arbre d'entraînement de roue (R) d'un appui de bras oscillant, caractérisée en ce que la suspension de roue comporte au-dessus d'un arbre d'entraînement de roue (R), deux bras de suspension (23, 24), détachés et maintenus sur le support de roue à distance (d) dans des paliers (21, 22), entre lesquels est placée une jambe d'amortisseur (25), soutenue sur le support de roue, le bras oscillant transversal (3) et la barre d'accouplement (8) donnant un pôle de direction de roue (P) situé à l'extérieur de l'écartement des roues (S) et derrière le plan transversal médian de roue z-z et en ce que devant le plan transversal médian de roue z-z et à l'intérieur du plan longitudinal médian de roue y-y on obtient un point de percée (X) à travers la surface d'appui de roue d'un axe (A) passant par l'articulation (1) côté support de roue du bras oscillant transversal (3) et un pôle imaginaire formé par les bras de suspension détachés et en ce que pour le réglage du pincement de la roue extérieure à la courbe sous une force latérale (Fₛ), la barre d'accouplement (8) ainsi que le bras oscillant transversal (3) sont soutenus sur la carrosserie du véhicule, chacun par un palier élastique (10 ; 1a) à peu près aussi dur, une intervention de force latérale se situant à l'extérieur du milieu des deux paliers (1a ; 10) côté carrosserie, et en ce que pour le réglage du pincement lors du freinage (F_{Br}), le tirant (4) est pourvu d'un palier (6) souple sur la carrosserie du véhicule, en direction de l'axe du tirant, par rapport aux paliers (1a ; 10) côté carrosserie du bras oscillant transversal (3) et de la barre d'accouplement (8), et en ce que la variation de la position de la roue se fait dans le sens d'une ouverture dans le cas d'une force d'entraînement (F_{A}) et dans le sens d'un pincement, dans le cas d'un changement de charge, la position de l'axe (A) et du pôle de direction de roue (P) étant telle que dans le cas d'une force d'entraînement (F_{A}) le bras oscillant transversal (3) est déplaçable sous traction et la barre d'accouplement (8), sous compression.

3. Suspension de roue selon les revendications 1 ou 2, caractérisée en ce que le bras oscillant transversal (3) présente un palier élastique (1a) sur la carrosserie du véhicule, devant - par rapport au sens de marche (F) - l'axe de rotation de roue (R) et l'articulation (1) se situe sur le support de roue (2), approximativement dans le plan transversal médian de roue z-z vertical.

4. Suspension de roue selon les revendications 1 ou 3, caractérisée en ce que le tirant (4) - vu de côté - s'étend sous un angle (alpha) par rapport à un plan horizontal, obliquement vers le haut et vers l'avant - par rapport au sens de marche (F) - et un palier (6) se situe sur la carrosserie du véhicule, au-dessus d'un plan horizontal, passant par l'axe de rotation de roue (R).

5. Suspension de roue selon les revendications 1 ou 2, caractérisée en ce que le tirant (4) - vu de côté - s'étend sous un angle (alpha) par rapport à un plan horizontal, obliquement vers le haut et vers l'avant - par rapport au sens de marche (F) - et un palier (6) se situe sur la carrosserie du véhicule, au-dessous d'un plan horizontal, passant par l'axe de rotation de roue (R).

6. Suspension de roue selon les revendications 3, 4 ou 5, caractérisée en ce que la barre d'accouplement (8) présente sur la carrosserie du véhicule un palier élastique (10) plus dur que le palier élastique (1a) du bras oscillant transversal (3) sur la carrosserie du véhicule, de manière que dans le cas d'une force latérale (Fₛ) sur la roue extérieure à la courbe, du fait d'un moment résultant de Fₛ x NL entre l'axe A et le sens d'action de la force latérale (Fₛ), est superposé un moment résultant de Fₛ x a et la barre d'accouplement (8) est soumise à une force de compression plus faible que le bras oscillant transversal (3) et la roue est déplaçable dans le sens d'une ouverture.

7. Suspension de roue selon les revendications 1, 2 et 6, caractérisée en ce que le bras oscillant transversal (3) et la barre d'accouplement (8) sont montés sur la carrosserie du véhicule, dans des paliers (1a, 10) de caractéristique radiale à peu près aussi dure et dans le cas d'une force latérale (Fₛ), il s'établit un moment résultant de Fₛ x a entre le sens d'action de la force latérale (Fₛ) et le pôle de direction de roue (P) et la roue est déplaçable dans le sens d'une ouverture autour du pôle de direction de roue, le tirant (4) étant monté sur la carrosserie du véhicule, dans un palier (6) avec caractéristique plus souple dans la direction axiale.

8. Suspension de roue selon les revendications 1, 2, 3, 4, 5, 6 ou 7, caractérisée en ce que la barre d'accouplement (8), le bras oscillant transversal (3) et le tirant (4), relié de manière articulée par un palier élastique (5), sont soutenus avec un palier (6) souple sur la carrosserie du véhicule, dans la direction de l'axe du tirant, et pour obtenir un réglage de l'ouverture lors du freinage, ils sont maintenus élastiquement sur la carrosserie du véhicule, dans des paliers (10 ; 1a et 6), de manière que par un moment, formé de F_{Br} x Lᵣ, le bras de levier (LR) se situant à l'extérieur de l'écartement des roues (S) et la roue étant déplaçable dans le sens d'une ouverture, le bras oscillant transversal (3) pouvant être sollicité en compression et la barre d'accouplement (8) en traction et ce moment étant complété simultanément par un moment résultant de la suspension longitudinale, formé par F_{Br} x b.

9. Suspension de roue selon les revendications 2, 3, 4, 5, 6 ou 7, caractérisée en ce que la barre d'accouplement (8), le bras oscillant transversal (3) et le tirant (4), relié de manière articulée par un palier élastique (5), sont soutenus avec un palier (6) souple, sur la carrosserie du véhicule, en direction de l'axe du tirant, et pour obtenir un réglage de l'ouverture lors du freinage, ils sont maintenus élastiquement sur la carrosserie du véhicule, dans des paliers (10 ; 1a et 6), de manière que par un moment, formé de F_{Br} x Lᵣ, le bras de levier (LR) se situant à l'extérieur de l'écartement des roues (S) et la roue est déplaçable dans le sens d'un pincement, le bras oscillant transversal (3) pouvant être sollicité en traction (Z) et la barre d'accouplement (8) en compression (D) et ce moment est simultanément superposé par un moment résultant de la suspension longitudinale, formé par F_{Br} x b.

10. Suspension de roue selon les revendications 1, 2 et 9, caractérisée en ce que le palier (6) du tirant présente une caractéristique limitant dans l'ensemble le réglage de l'ouverture.

11. Suspension de roue selon les revendications 1, 2, 3, 4, 5, 6, 7, 8, 9 ou 10, caractérisée en ce que l'axe (A) est placé à hauteur de l'axe de rotation de roue (R), à distance (RST), par rapport au sens d'action de la force d'entraînement (F_{A}) et les paliers (1a et 10) côté carrosserie présentent une élasticité telle que par le moment FA x RST, le bras oscillant transversal (3) peut être sollicité en compression et la barre d'accouplement (8), en traction, le bras de levier (RST) se situant à l'intérieur de l'écartement des roues (S) et la roue étant déplacée dans le sens d'un pincement et ce réglage de pincement étant superposé à un réglage d'ouverture par le moment F_{A} x c autour du pôle de direction de roue (T), de sorte que dans le cas d'une force d'entraînement (F_{A}), il se produit dans l'ensemble une variation de la position de la roue dans le sens d'une ouverture et dans le cas d'un changement de charge, dans le sens d'un pincement, le tirant (4) étant soutenu sur la carrosserie du véhicule dans le palier (6) souple, en direction de l'axe du tirant.

12. Suspension de roue selon les revendications 2, 3, 4, 5, 6, 7, 8, 9 ou 10 caractérisée en ce que l'axe (A) est placé à hauteur de l'axe de rotation de roue (R), à distance (RST), par rapport au sens d'action de la force d'entraînement (F_{A}) et les paliers (1a et 10) côté carrosserie présentent une élasticité telle que par le moment FA x RST, le bras oscillant transversal (3) peut être sollicité en traction et la barre d'accouplement (8), en compression, le bras de levier (RST) se situant à l'extérieur de l'écartement des roues (S) et la roue étant déplacée dans le sens d'une ouverture et à ce réglage d'ouverture étant superposé un réglage d'ouverture supplémentaire par le moment F_{A} x c autour du pôle de direction de roue (T), de sorte que dans le cas d'une force d'entraînement (F_{A}), il se produit dans l'ensemble une variation de la position de la roue dans le sens d'une ouverture et dans le cas d'un changement de charge, dans le sens d'un pincement, le tirant (4) étant soutenu sur la carrosserie du véhicule dans le palier (6) souple, en direction de l'axe du tirant.
